(19) Europäisches Patentamt

European Patent Office

Office européen des brevets

(11) **EP 1 093 056 B1**

(12) **EUROPEAN PATENT SPECIFICATION**

(45) Date of publication and mention
of the grant of the patent:
**11.01.2006 Bulletin 2006/02**

(51) Int Cl.:
***G06F 12/14*** *(2006.01)*

(21) Application number: **00122169.6**

(22) Date of filing: **12.10.2000**

(54) **Data processor having data processing unit incorporating scramble and descramble means**

Datenprozessor mit Datenverarbeitungseinheit, die eine Ver- und eine Entschlüsselungsvorrichtung enthält

Processeur de données avec unité de traitement de données comprenant des moyens de brouillage et de débrouillage

(84) Designated Contracting States:
**DE FR GB**

(30) Priority: **13.10.1999 JP 29093599**

(43) Date of publication of application:
**18.04.2001 Bulletin 2001/16**

(73) Proprietor: **NEC Electronics Corporation
Kawasaki, Kanagawa 211-8668 (JP)**

(72) Inventor: **Yamashita, Kazuyuki,
c/o NEC IC Microcomputer Sys.
Kawasaki-shi,
Kanagawa (JP)**

(74) Representative: **Betten & Resch
Postfach 10 02 51
80076 München (DE)**

(56) References cited:
**US-A- 4 319 079       US-A- 4 573 119
US-A- 5 081 675       US-A- 5 095 525
US-A- 5 892 826**

**Description**

BACKGROUND OF THE INVENTION

1. Field of the Invention:

The present invention relates to a data processor having a means for scrambling data to be written to a data memory and a means for descrambling the scrambled data.

2. Description of the Related Art:

Currently, a data processor such as a so-called one chip microcomputer includes a data memory such as a RAM (Random Access Memory) and a data processing unit such as a CPU (Central Processing Unit) which are interconnected through a data bus and an address bus.

In such a data processor., since the data memory is connected with the data processing unit through the data bus, unauthorized acquisition of data transferred through the data bus is possible by probing from the outside.

Japanese Patent Laid-open Publication No.11-167526 and Japanese Patent Laid-open Publication No.11-203237 disclose data processors intended for preventing data from being leaked out as mentioned above. The data processors disclosed in these official gazettes are hereinafter described in brief.

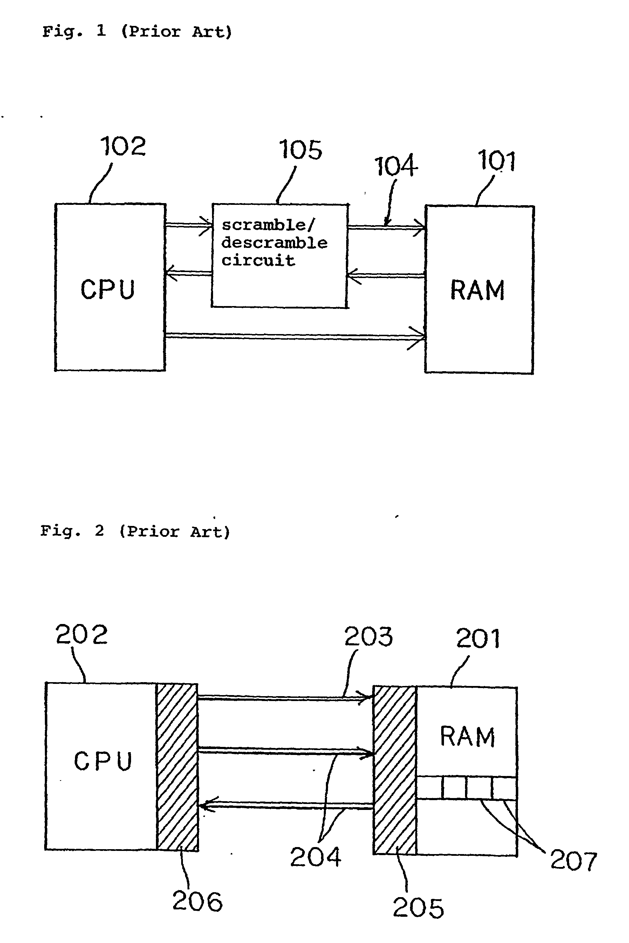

First, the data processor disclosed in Japanese Patent Laid-open Publication No.11-167526 comprises, as shown in Fig. 1, RAM 101 serving as a data memory and CPU 102 serving as a data processing unit interconnected through address bus 103 and data buses 104, and further comprises scramble/descramble circuit 105 disposed at the midpoint of data buses 104.

Scramble/descramble circuit 105 scrambles data to be written to RAM 101 from CPU 102 and descrambles the scrambled data read from RAM 101 to CPU 102. Thus, in the data processor, probing of the stored states of memory cells in RAM 101 allows only the scrambled data to be acquired, and probing of data buses 104 between scramble/descramble circuit 105 and RAM 101 allows only the scrambled data to be acquired.

The data processor disclosed in Japanese Patent Laid-open Publication No.11-203237 comprises, as shown in Fig. 2, RAM 201 serving as a data memory and CPU 202 serving as a data processing unit interconnected through address bus 203 and data buses 204, and further comprises scramble/descramble circuits 205 and 206 incorporated in RAM 201 and CPU 202, respectively.

Thus, in this data processor, data to be written to RAM 201 from CPU 202 is transferred to RAM 201 through data bus 204 after being scrambled at scramble/descramble circuit 206 of CPU 202, and is written to RAM 201 after being descrambled at scramble/descramble circuit 205.

Data to be read from RAM 201 to CPU 202 has also been scrambled by the time of transfer through data bus 204. Thus, in this data processor, probing of data bus 204 allows only the scrambled data to be acquired.

However, in the data processor shown in Fig. 1, probing of data bus 104 between scramble/descramble circuit 105 and CPU 102 permits unauthorized acquisition of data. In the data processor shown in Fig. 2, probing of the stored states in memory cells 207 of RAM 201 permits unauthorized acquisition of data.

From US 5,892,826 a data processor is known which flexibly encrypts data within different address ranges including an encryption determination circuit to monitor an address conducted on an internal address bus and when the address is within certain predefined ranges, performs encryption or decryption of address and/or data. The encryption determination circuit may be used to selectively enable a data encryption/decryption circuit. The data stored in a first and a second ROM are read and scramble control using the read data is performed to access a memory. This procedure lengthens the total read cycle time because the ROM memories must be read prior to access to a memory to be scrambled. Furthermore, the circuit size is increased.

From US 5,095,525 a computer memory is known which is transformed such that a data word to be sent to an address is transformed into a data word and the address to which it is to be sent is transformed into a transformed address. Such transformations are formed by inversion and permutation of the memory lines (address or data). The data transformation process depends on the address. The data inverse transformation process also depends on the address, but there is no address inverse transformation process.

SUMMARY OF THE INVENTION

It is an object of the present invention to provide a data processor capable of favorably preventing data leakage with a simple structure.

According to the present invention a data processor as defined in claim 1 is provided. The data processor incorporates a means for scrambling data to be written to a data memory and a means for descrambling the scrambled data written in the data memory only in a data processing unit.

Since probing of the stored state of a data bus or memory cells in the data memory allows only the scrambled data to be acquired, it is difficult to obtain the original data before scrambling.

According to an embodiment of the present invention, the scramble means scrambles data using a write address, and the descramble means descrambles the scrambled data using a read address as a key.

Since the scrambled data is changed corresponding to the write address, it is difficult to obtain the original data by analyzing the scrambled data. In this case, all the bits of the data need not be scrambled, and some of the bits of the address may be used. Scrambling or descrambling of the data using the values of lower bits of the address makes it more difficult to obtain the original data by analyzing the scrambled data since the values of the lower bits are frequently changed.

According to another embodiment of the present invention, each of the scramble means and the descramble means comprises inverter means for inverting each of a plurality of bits at predetermined positions in data, and selector means for selecting each of the plurality of bits at the predetermined positions in the data or each of inverted bits obtained by inverting the bits in accordance with a value of a corresponding one of a plurality of bits at predetermined positions in a writing/reading address of the data.

According to another embodiment of the present invention, the data memory is divided into a plurality of areas based on addresses, and data is scrambled/descrambled based on each area.

The above and other objects, features and advantages of the present invention will become apparent from the following description with reference to the accompanying drawings which illustrate examples of the present invention.

BRIEF DESCRIPTION OF THE DRAWINGS

Fig. 1 is a block diagram schematically showing main portions of a first prior art of a data processor;
Fig. 2 is a block diagram schematically showing main portions of a second prior art of the data processor;
Fig. 3 is a block diagram showing main portions of a data processor according to a first embodiment of the present invention;
Fig. 4 is a diagram showing divided areas of a RAM serving as a data memory in a data processor according to a second embodiment of the present invention; and
Fig. 5 is a block diagram showing main portions of the data processor of the second embodiment.

DESCRIPTION OF THE PREFERRED EMBODIMENTS

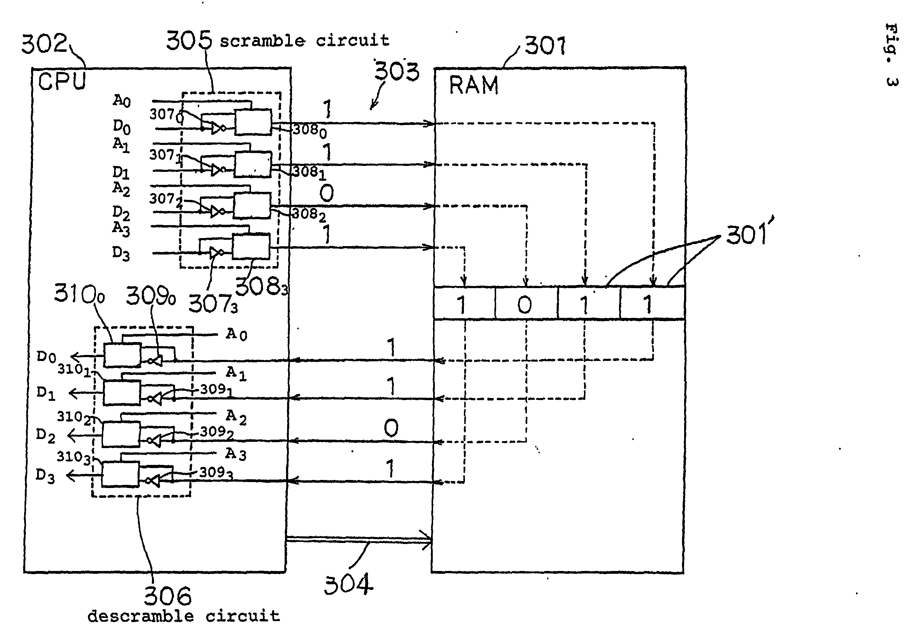

Referring now to Fig. 3, there is shown a data processor according to a first embodiment of the present invention, for example formed as a one chip microcomputer, and comprising RAM 301 serving as a data memory, CPU 302 serving as a data processing unit, data bus 303 and address bus 304 for connecting RAM 301 with CPU 302. Assume that data to be written to and read from RAM 301 includes four bits.

RAM 301 includes a number of memory cells 301' disposed in a matrix for storing data at individually specified addresses. CPU 302 executes various types of data processing, stores various data at determined addresses in RAM 301, and reads data from RAM 301.

CPU 302 includes scramble circuit 305 and descramble circuit 306.

Scramble circuit 305 is connected to data bus 303 for scrambling data to be written to RAM 301 from CPU 302. Descramble circuit 306 is also connected to data bus 303 for descrambling the scrambled data read from RAM 301 by CPU 302.

Scramble circuit 305 comprises inverters $307_0$, $307_1$, $307_2$ and $307_3$ and selectors $308_0$, $308_1$, $308_2$ and $308_3$. Inverters $307_0$, $307_1$, $307_2$ and $307_3$ invert 0 bit $D_0$, 1 bit $D_1$, 2 bit $D_2$ and 3 bit $D_3$ in data, respectively. Selectors $308_0$, $308_1$, $308_2$ and $308_3$ output bits $D_0$, $D_1$, $D_2$ and $D_3$ respectively as they are when 0 bit $A_0$, 1 bit $A_1$, 2 bit $A_2$ and 3 bit $A_3$ of its address are "0", or when they are "1," output bits $\overline{D}_0$, $\overline{D}_1$, $\overline{D}_2$ and $\overline{D}_3$ obtained by inverting bits $D_0$, $D_1$, $D_2$ and $D_3$ by inverters $307_0$, $307_1$, $307_2$ and $307_3$, respectively. Descramble circuit 306 also comprises inverters $309_0$, $309_1$, $309_2$ and $309_3$ and selectors $310_0$, $310_1$, $310_2$ and $310_3$. Inverters $309_0$, $309_1$, $309_2$ and $309_3$ correspond to inverters $307_0$, $307_1$, $307_2$ and $307_3$, while selectors $310_0$, $310_1$, $310_2$ and $310_3$ correspond to selectors $308_0$, $308_1$, $308_2$ and $308_3$, respectively.

If data to be written to RAM 301 by CPU 302 is, for example, "1110" with four lower bits of its address "0101", the data is scrambled into "1011" and written to RAM 301 through data bus 303. The data "1011" written to RAM 301 is input to CPU 302 through data bus 303 and descrambled into the original data "1110" by descramble circuit 306.

Therefore, probing of data bus 303 allows only the scrambled data to be acquired, and probing of the stored states of the memory cells in RAM 301 allows only the scrambled data to be acquired, thereby presenting favorable security for data.

In addition, in the embodiment, data is scrambled in accordance with its address and is not scrambled uniformly, thus making it difficult to obtain the original data by analyzing the scrambled data. Furthermore, since the address is used as the key for scrambling and descrambling, the scrambled data can be descrambled readily and reliably even when data is written in timing different from data reading.

Also, since lower bits of address data used as the key for scrambling and descrambling are changed frequently, the scrambling state of data also is frequently changed, thus making it more difficult to obtain the original data by analyzing the data.

Scramble circuit 305 and descramble circuit 306 comprise the plurality of inverters and selectors to enable the scramble and descramble circuits to be realized with a simple structure.

While the aforementioned embodiment illustrates scrambling and descrambling of all bits of data in accordance with lower bits of its address, the present invention is not limited thereto.

For example, it is possible to perform scrambling and descrambling by using predetermined bits other than the lower bits of an address as the key, or to scramble only some of the bits at predetermined positions in data. Since lower bits of an address are frequently changed as described hereinabove, the scrambling state can be frequently changed when they are used as the key. However, if it turns out that the lower bits of the address are the key for scrambling, the original data can be readily detected. In this case, arbitrary bits of the address are preferably used as the key for scrambling.

While the aforementioned embodiment illustrates a RAM as a data memory, any data memory may be used which stores data corresponding to its address, and for example, a flash memory, an FD (Floppy Disc), or an MO (Magnetic Optical Disc) may be used.

Next, a second embodiment of the present invention will be described.

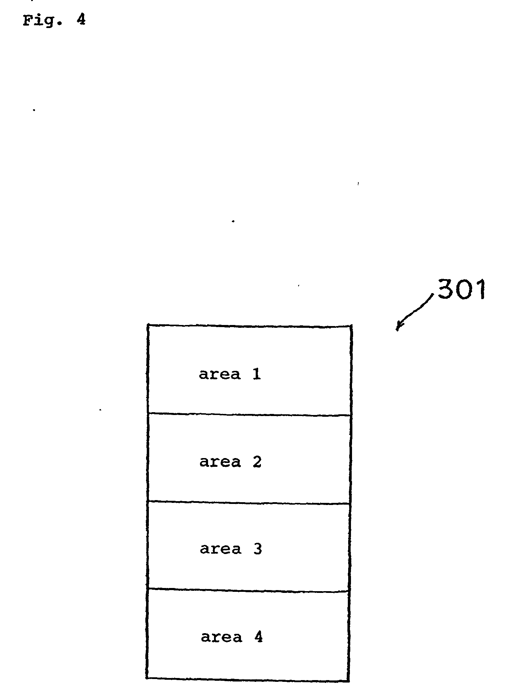

In a data processor of the second embodiment, as shown in Fig. 4, RAM 301 has four areas divided corresponding to addresses.

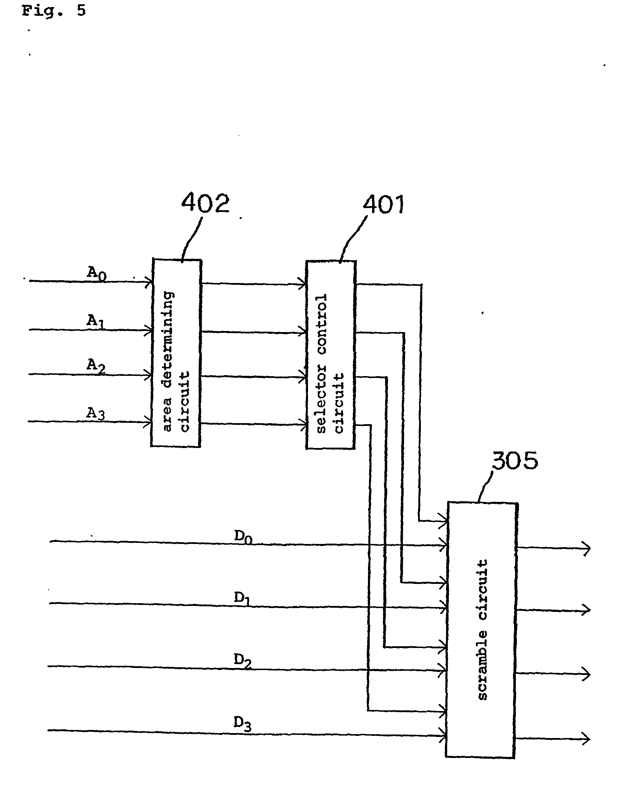

Additionally in the embodiment, as shown in Fig. 5, instead of direct input of address bits $A_0$, $A_1$, $A_2$ and $A_3$ to selectors $308_0$, $308_1$, $308_2$ and $308_3$ of scramble circuit 305, selector control circuit 401 is connected to selectors $308_0$, $308_1$, $308_2$ and $308_3$, and area determining circuit 402 is connected to selector control circuit 401.

Area determining circuit 402 receives all bits $A_{11}$, $A_{10}$, ..., $A_0$ of an address, determines its area (Area 1, Area 2, Area 3 or Area 4), and outputs to selector control circuit 401 an area signal of four bits with only a predetermined one bit being "1" as the determination result. Selector control circuit 401 comprises AND gates and OR gates, and outputs a selector control signal of four bits in a pattern corresponding to each area signal.

For descramble circuit 306, selector control circuit 401 and area determining circuit 402 are similarly provided. The address input to area determining circuit 402 may be some of the bits as long as they enable the identification of the area.

In the embodiment, similar to the first embodiment, data is scrambled in accordance with address data and the scrambled data is descrambled in accordance with the address data, thereby making it more difficult to analyze the data.

While preferred embodiments of the present invention have been described using specific terms, such description is for illustrative purposes only, and it is to be understood that changes and variations may be made,

**Claims**

1. A data processor comprising:

   a data memory (301);
   a data bus (303) for transferring data to be written to said data memory or read from said data memory;
   an address bus (304) for transferring an address for writing to said data memory or reading from said data memory; and
   a data processing unit (302) connected to said data memory through said data bus and through said address bus, for writing data at a specified address in said data memory and for reading data at a specified address in said data memory; said data processing unit incorporating means (305) for scrambling data to be written to said data memory and means (306) for descrambling scrambled data read from said data memory **characterized in that** each of said scramble means and said descramble means comprises:

      inverter means (307) for inverting each of a plurality of bits at predetermined positions in data;
      selector means (308) for selecting each of said plurality of bits at said predetermined positions in said data or each of inverted bits obtained by inverting said bits in accordance with a control signal;
      area determining means (402) for receiving all or some of the bits of a write/read address of said data and for determining one of said plurality of areas in said data memory including said address; and
      selector control means (401) for outputting control signals at predetermined values to said selectors based on said area determined by said area determining means.

2. The data processor according to claim 1, wherein said scramble means scrambles data using a write address, and said descramble means descrambles scrambled data using a read address as a key.

3. The data processor according to claim 2, wherein said scramble means inverts each of a plurality of bits at predetermined positions in data when a corresponding one of a plurality of bits at predetermined positions in a writing address is at a predetermined value, and said descramble means inverts each of a plurality of bits at said predetermined positions in scrambled data when a corresponding one of a plurality of bits at said predetermined positions in a reading address is at said predetermined value.

**4.** The data processor according to claim 3, wherein said plurality of bits in said address are lower bits.

**5.** The data processor according to claim 3, wherein each of said scramble means and said descramble means comprises:

inverter means for inverting each of a plurality of bits at predetermined positions in data; and selector means for selecting each of said plurality of bits at said predetermined positions in said data or each of inverted bits obtained by inverting said bits in accordance with a value of a corresponding one of a plurality of bits at predetermined positions in a writing/reading address of said data.

**6.** The data processor according to claim 1, wherein said scramble means scrambles data based on areas in said data memory divided previously on the basis of an address, and said descramble means descrambles scrambled data based on said areas in said data memory.

**Patentansprüche**

**1.** Datenprozessor, der folgendes aufweist:

einen Datenspeicher (301);
einen Datenbus (303) zum Transferieren von auf den Datenspeicher zu schreibenden oder aus dem Datenspeicher zu lesenden Daten;
einen Adressenbus (304) zum Transferieren einer Adresse zum Schreiben auf den Datenspeicher oder zum Lesen aus dem Datenspeicher; und
eine Datenverarbeitungseinheit (302), die mit dem Datenspeicher über den Datenbus und über den Adressenbus verbunden ist, zum Schreiben von Daten bei einer spezifizierten Adresse im Datenspeicher und zum Lesen von Daten bei einer spezifizierten Adresse im Datenspeicher;

wobei die Datenverarbeitungseinheit eine Einrichtung (305) zum Verschlüsseln von auf den Datenspeicher zu schreibenden Daten und eine Einrichtung (306) zum Entschlüsseln von aus dem Datenspeicher gelesenen verschlüsselten Daten aufweist, **dadurch gekennzeichnet, dass** jede der Verschlüsselungseinrichtung und der Entschlüsselungseinrichtung folgendes aufweist:

eine Invertereinrichtung (307) zum Invertieren von jedem einer Vielzahl von Bits bei vorbestimmten Positionen in Daten;

eine Selektoreinrichtung (308) zum Auswählen von jedem der Vielzahl von Bits bei den vorbestimmten Positionen in den Daten oder von jedem von invertierten Bits, die durch Invertieren der Bits gemäß einem Steuersignal erhalten sind;
einer Bereichsbestimmungseinrichtung (402) zum Empfangen von allen oder einigen der Bits einer Schreib/Lese-Adresse der Daten und zum Bestimmen von einem der Vielzahl von die Adresse enthaltenden Bereichen in dem Datenspeicher; und
eine Selektor-Steuereinrichtung (401) zum Ausgeben von Steuersignalen bei vorbestimmten Werten zu den Selektoren basierend auf dem durch die Bereichsbestimmungseinrichtung bestimmten Bereich.

**2.** Datenprozessor nach Anspruch 1, wobei die Verschlüsselungseinrichtung Daten unter Verwendung einer Schreibadresse verschlüsselt und die Entschlüsselungseinrichtung verschlüsselte Daten unter Verwendung einer Leseadresse als Schlüssel entschüsselt.

**3.** Datenprozessor nach Anspruch 2, wobei die Verschlüsselungseinrichtung jedes einer Vielzahl von Bits bei vorbestimmten Positionen in Daten invertiert, wenn ein entsprechendes einer Vielzahl von Bits bei vorbestimmten Positionen bei einer Schreibadresse einen vorbestimmten Wert hat, und die Entschlüsselungseinrichtung jedes einer Vielzahl von Bits bei den vorbestimmten Position in verschlüsselte Daten invertiert, wenn ein entsprechendes einer Vielzahl von Bits bei den vorbestimmten Positionen bei einer Leseadresse bei dem vorbestimmten Wert ist.

**4.** Datenprozessor nach Anspruch 3, wobei die Vielzahl von Bits bei der Adresse niederwertigere Bits sind.

**5.** Datenprozessor nach Anspruch 3, wobei jede der Verschlüsselungseinrichtung und der Entschlüsselungseinrichtung folgendes aufweist:

eine Invertereinrichtung zum Invertieren von jedem einer Vielzahl von Bits bei vorbestimmten Positionen in Daten; und
eine Selektoreinrichtung zum Auswählen von jedem der Vielzahl von Bits bei den vorbestimmten Positionen in den Daten oder von jedem von invertierten Bits, die durch Invertieren der Bits gemäß einem Wert eines entsprechenden einer Vielzahl von Bits bei vorbestimmten Positionen bei einer Schreib/Lese-Adresse der Daten erhalten sind.

**6.** Datenprozessor nach Anspruch 1, wobei die Verschlüsselungseinrichtung Daten basierend auf zuvor auf der Basis einer Adresse aufgeteilten Bereichen in dem Datenspeicher verschlüsselt und die Entschlüsselungseinrichtung verschlüsselte Daten basierend auf den Bereichen in dem Datenspeicher entschüsselt.

**Revendications**

**1.** Processeur de données comprenant :

une mémoire de données (301) ;
un bus de données (303) pour transférer des données à écrire vers ladite mémoire de données ou à lire en provenance de ladite mémoire de données ;
un bus d'adresses (304) pour transférer une adresse d'écriture vers ladite mémoire de données ou de lecture en provenance de ladite mémoire de données ; et
une unité de traitement de données (302) reliée à ladite mémoire de données par l'intermédiaire dudit bus de données et par l'intermédiaire dudit bus d'adresses, pour écrire des données à une adresse spécifiée dans ladite mémoire de données et pour lire des données à une adresse spécifiée dans ladite mémoire de données ;
ladite unité de traitement de données incorporant des moyens (305) pour crypter des données à écrire dans ladite mémoire de données et des moyens (306) pour décrypter des données cryptées lues à partir de ladite mémoire de données,

**caractérisé en ce que**
chacun desdits moyens de cryptage et desdits moyens de décryptage comprend :

des moyens d'inversion (307) pour inverser chaque bit d'une pluralité de bits à des positions prédéterminées dans les données ;
des moyens de sélection (308) pour sélectionner chaque bit de ladite pluralité de bits auxdites positions prédéterminées dans lesdites données ou chacun des bits inversés obtenus en inversant lesdits bits selon un signal de commande ;
des moyens de détermination de zone (402) pour recevoir tout ou partie des bits d'une adresse de lecture / écriture desdites données et pour déterminer l'une de ladite pluralité de zones dans ladite mémoire de données comprenant ladite adresse ; et
des moyens de commande de sélecteur (401) pour sortir des signaux de commande à des valeurs prédéterminées vers lesdits sélecteurs sur la base de ladite zone déterminée par lesdits moyens de détermination de zone.

**2.** Processeur de données selon la revendication 1, dans lequel lesdits moyens de cryptage cryptent les données en utilisant une adresse d'écriture, et lesdits moyens de décryptage décryptent les données en utilisant une adresse de lecture comme clé.

**3.** Processeur de données selon la revendication 2, dans lequel lesdits moyens de cryptage inversent chaque bit d'une pluralité de bits à des positions prédéterminées dans les données quand un bit correspondant d'une pluralité de bits à des positions prédéterminées dans une adresse d'écriture est à une valeur prédéterminée, et lesdits moyens de décryptage inversent chaque bit d'une pluralité de bits auxdites positions prédéterminées dans les données cryptées quand un bit correspondant d'une pluralité de bits auxdites positions prédéterminées dans une adresse de lecture est à ladite valeur prédéterminée.

**4.** Processeur de données selon la revendication 3, dans lequel ladite pluralité de bits dans ladite adresse est constituée par des bits inférieurs.

**5.** Processeur de données selon la revendication 3, dans lequel chacun desdits moyens de cryptage et desdits moyens de décryptage comprend :

des moyens d'inversion pour inverser chaque bit d'une pluralité de bits à des positions prédéterminées dans les données ; et
des moyens de sélection pour sélectionner chaque bit de ladite pluralité de bits auxdites positions prédéterminées dans lesdites données ou chacun des bits inversés obtenus en inversant lesdits bits selon une valeur d'un bit correspondant d'une pluralité de bits à des positions prédéterminées dans une adresse de lecture / écriture desdites données.

**6.** Processeur de données selon la revendication 1, dans lequel lesdits moyens de cryptage cryptent des données sur la base de zones dans ladite mémoire de données précédemment divisée sur la base d'une adresse, et lesdits moyens de décryptage décryptent des données cryptées sur la base desdites zones dans ladite mémoire de données.

Fig. 1 (Prior Art)

Fig. 2 (Prior Art)

Fig. 3

Fig. 4

301

| |
|---|
| area 1 |
| area 2 |
| area 3 |
| area 4 |

Fig. 5